# FASCICULE DE BREVET EUROPEEN

(11) **EP 2 659 289 B1**
(45) Date de publication et mention de la délivrance du brevet: **29.04.2015**
(21) Numéro de dépôt: 11797212.5
(22) Date de dépôt: 06.12.2011
(51) Int. Cl.: G01S 19/07, G01S 19/05, G01S 19/25

(54) **PROCEDE D'AMELIORATION DE LA POURSUITE D'UN SIGNAL DE TRANSMISSION DE DONNEES D'UN SYSTEME DE NAVIGATION PAR SATELLITES.**
VERFAHREN ZUR VERBESSERUNG DER VERFOLGUNG EINES DATENÜBERTRAGUNGSSIGNALS EINES SATELLITENNAVIGATIONSSYSTEMS
METHOD FOR IMPROVING THE TRACKING OF A DATA TRANSMISSION SIGNAL OF A SATELLITE NAVIGATION SYSTEM

(30) Priorité: 30.12.2010 FR 1005179
(43) Date de publication de la demande: 06.11.2013
(73) Titulaire: THALES, 92200 Neuilly-sur-Seine (FR)
(72) Inventeur: DAMIDAUX, Jean-Louis, F-31650 Auzielle (FR)
(74) Mandataire: Derval, Estelle
(86) Numéro de dépôt international: PCT/EP2011/071906
(87) Numéro de publication internationale: WO 2012/089452

(56) Documents cités:
- US-A1- 2005 159 891
- MARCO ANGHILERI ET AL: "Performance Evaluation of a Multi-frequencyGPS/Galileo/SBAS Software Receiver", ION GNSS 20TH INTERNATIONAL TECHNICAL MEETING OF THE SATELLITE DIVISION, 28 septembre 2007 (2007-09-28), pages 2749-2761, XP002657523, Fort Worth, Texas
- YONG HYUN KIM ET AL: "Design of GPS/SBAS software receiver", CONTROL, AUTOMATION AND SYSTEMS, 2007. ICCAS '07. INTERNATIONAL CONFERENCE ON, IEEE, PISCATAWAY, NJ, USA, 17 octobre 2007 (2007-10-17), pages 2550-2553, XP031224018, ISBN: 978-89-950038-6-2
- "EGNOS Fact Sheet 12: The Egnos Signal Explained", INTERNET CITATION, 2005, XP002425615, Extrait de l'Internet: URL:http://www.egnos-pro.esa.int/Publicati ons/2005%20Updated%20Fact%20She ets/fact_sheet_19.pdf [extrait le 2007-03-19]

## Description

Le domaine de l'invention est celui des systèmes de navigation par satellites communément appelés GNSS, en référence à l'expression anglo-saxonne "Global Navigation Satellite System."

Dans ces systèmes, un récepteur de positionnement par satellites embarqué à bord d'un mobile fournit des informations de position du mobile obtenues par triangulation à partir des signaux de navigation émis par les satellites visibles depuis le mobile.

Le récepteur reçoit également des signaux transmission de données qui transmettent des données complémentaires au récepteur de positionnement par satellites, de façon à améliorer les services rendus aux utilisateurs, par exemple, en améliorant la précision ou l'intégrité du positionnement du mobile.

Parmi les signaux de transmission de données on peut citer les signaux d'augmentation, issus d'un système d'augmentation GNSS du type GBAS (de l'anglo-saxon "Ground-Based Augmentation System") ou SBAS (de l'anglo-saxon "Space-Based Augmentation System"), basés sur une ou plusieurs stations au sol, aptes à identifier les erreurs sur les informations fournies par des satellites et à envoyer, au récepteur de positionnement par satellites, des signaux d'augmentation transportant des données représentatives de corrections individuelles sur les signaux émis par les satellites. Les systèmes de navigation par satellites comprenant des systèmes d'augmentation permettent de fournir des informations de position de meilleure précision et plus intègres que celles issues de systèmes de navigation par satellites dépourvus de systèmes d'augmentation.

Les signaux de transmission de données actuels sont envoyés avec un débit prédéterminé et un codage prédéterminé du type Viterbi, qui limitent leurs performances. Typiquement, pour un signal transmis sur 1 seconde, 500 symboles sont envoyés en étant codés sur 2ms. Les données sont envoyées sur une voie de données (porteuse des données à transmettre par le signal et modulée par des symboles) mais sans voie pilote (voie non porteuse de message, non modulée par des symboles), ce qui limite les capacités de poursuite (« tracking » en anglais) de ces signaux au niveau du récepteur. En effet, la poursuite est plus facilement réalisée sur une voie pilote que sur une voie de données car il est possible d'accumuler d'une façon cohérente l'énergie d'une voie pilote alors que sur une voie données cette accumulation doit se faire de façon incohérente ce qui introduit un niveau de bruit supplémentaire.

On cherche à améliorer la qualité des services rendus par les systèmes de navigation par satellites actuels tout en gardant la compatibilité avec les services et développements actuels, c'est-à-dire tout en utilisant les récepteurs et les signaux actuels.

Dans la publication XP002657523, il est proposé de démoduler tous les signaux de navigation et le signal EGNOS, à la fin d'améliorer la sensibilité. Actuellement, pour améliorer les services rendus aux utilisateurs, on envoie un signal d'amélioration au récepteur. Toutefois, le signal d'amélioration est ajouté au signal de transmission de données existant dans la limite de puissances autorisées par les régulations. La puissance autorisée doit donc être partagée entre les différents signaux.

Actuellement, le signal d'amélioration comprend :
- soit une voie de données, ce qui permet d'envoyer des données supplémentaires au récepteur pour fournir de nouveaux services aux utilisateurs, mais ne permet pas d'améliorer la poursuite du signal de transmission de données actuel,
- soit une voie pilote et une voie de données ce qui réduit les performances de poursuite et de décodage de la nouvelle voie de données car la puissance autorisée par la réglementation est partagée entre la voie pilote et la voie de données.

Le but de la présente invention est de proposer un procédé d'amélioration de la poursuite du signal de transmission de données, qui est par exemple un signal d'augmentation, d'un système de navigation par satellites, qui pallie les inconvénients précités.

A cet effet, l'invention a pour objet un procédé d'amélioration de la poursuite d'un signal de transmission de données émis vers un récepteur d'un système de navigation par satellites en plus de signaux de navigation qui lui sont transmis par les satellites, ledit procédé comprenant :
- une étape de transmission vers le récepteur, pendant une période appelée période d'amélioration et au moyen d'un signal d'amélioration émis en cohérence avec ledit signal de transmission de données, de données ou d'autres données permettant de prédire lesdites données, lesdites données étant en outre transmises vers le récepteur au moyen du signal de transmission de données pendant une période de transmission débutant après la fin de la période d'amélioration,
- une étape de réception, par le récepteur, desdites données ou desdites autres données qui sont transmises au moyen du signal d'amélioration,
- une étape de génération de symboles servant à moduler le signal de transmission de données pendant la période de transmission, au moyen desdites données reçues ou desdites autres données reçues,
- une étape de poursuite du signal de transmission de données en supprimant l'effet de la modulation dudit signal de transmission de données par les symboles générés.

Avantageusement, le signal de transmission de données est un signal d'augmentation.

Selon une première caractéristique, le signal de transmission de données est transmis avec un premier codage de données du type Viterbi.

Avantageusement, le signal d'amélioration est transmis avec un deuxième codage tel que le seuil de démodulation du signal d'amélioration par le récepteur, est plus faible que le seuil de démodulation du signal de transmission de données par le récepteur.

Avantageusement, le signal d'amélioration est transmis avec un deuxième codage du type LDPC ou Turbocode.

Avantageusement, le signal d'amélioration est transmis avec entrelacement.

Avantageusement, la durée de la période d'amélioration est plus courte que la durée de la période de transmission.

Avantageusement, des données supplémentaires sont en outre transmises au récepteur au moyen du signal d'amélioration.

La solution proposée permet d'améliorer la poursuite de signaux de transmission de données comme, par exemple, les signaux d'augmentation, utilisés dans les systèmes de navigation par satellites en plus des signaux de navigation émis par les satellites, tout en conservant la compatibilité avec les systèmes existants car on se sert des signaux de transmission de données existants. La solution proposée est utilisable avec les systèmes d'augmentation existants, par exemple, les systèmes SBAS, qui sont déployés dans les systèmes WAAS, MTSAT et EGNOS.

La solution proposée ne nécessite pas d'ajouter une voie pilote car le signal de transmission de données qui est à l'origine une voie de données n'est plus utilisé comme une voie de données mais comme une voie pilote.

Cela permet d'allouer toute la puissance autorisée sur la deuxième voie de données sur laquelle est transmise le signal d'amélioration et d'obtenir de bonnes performances en termes de qualité de la réception des données sur le signal d'amélioration (forte puissance). La performance en termes de réception peut être encore accrue grâce à l'utilisation de codages performances (par exemple LDPC) et de schémas d'entrelacements.

Par ailleurs, étant donné que la poursuite est réalisée, non plus sur une voie de données, mais sur une voie pilote, on abaisse le seuil de poursuite du signal c'est-à-dire la puissance minimale du signal reçu par le récepteur, pour que la poursuite soit possible.

En outre, avec la solution proposée, il n'est pas nécessaire de transmettre à la fois une nouvelle voie pilote et une nouvelle voie de données pour améliorer la poursuite et fournir de nouveaux services (en transmettant des données supplémentaires au récepteur). Une seule voie de données est nécessaire. L'énergie nécessaire pour l'émission des signaux d'amélioration et de transmission de données, par exemple, d'augmentation est l'énergie nécessaire pour l'émission de 2 voies de transmission et non pour 3 voies de transmission.

Le procédé selon l'invention est en outre un procédé autonome qui est mis en oeuvre uniquement à partir de données, par exemple de données d'augmentation, qui sont, elles-mêmes, fournies par le constructeur du système de transmission de données, par exemple, du système d'augmentation. Les données sont donc rapidement à disposition de l'émetteur pour l'envoi du signal d'amélioration au récepteur. Cela permet d'assurer l'envoi des données sur la voie d'amélioration avec la rapidité adaptée à la variation rapide des données d'amélioration comparée aux données de navigation envoyées par les satellites. Typiquement, les données d'augmentation varient environ toutes les secondes alors que les données GPS varient plutôt toutes les heures.

D'autres caractéristiques et avantages de l'invention apparaîtront à la lecture de la description détaillée qui suit, faite à titre d'exemple non limitatif et en référence aux dessins annexés dans lesquels :
- la figure 1 représente schématiquement les étapes du procédé selon l'invention,
- la figure 2 représente schématiquement un exemple de façon de transmettre des données transmises sur une première et une deuxième voies de données dans le procédé selon l'invention.

D'une figure à l'autre, les mêmes éléments sont repérés par les mêmes références.

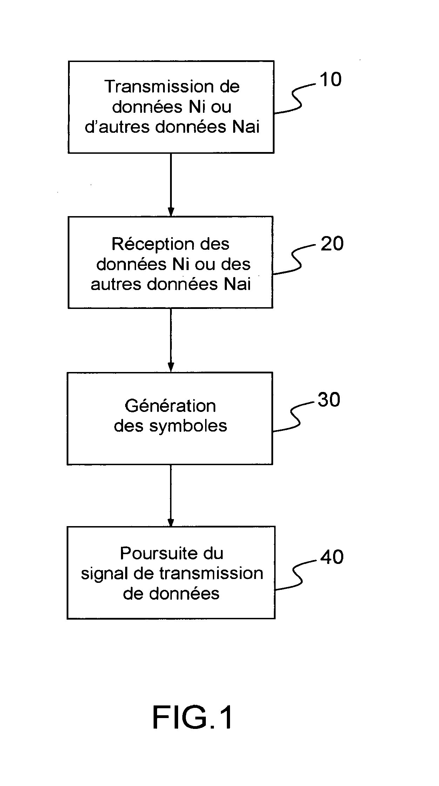

La figure 1 représente schématiquement les étapes du procédé selon l'invention correspondant à un procédé d'amélioration d'un signal de transmission de données transmis, en plus des signaux de navigation envoyés par les satellites visibles, vers le récepteur.

Un signal de transmission de données peut être sous forme d'un signal d'augmentation qui transmet, par exemple, des données d'augmentation, qui sont des corrections individuelles sur les signaux de navigation émis par les satellites GNSS visibles vers le récepteur.

Le procédé selon l'invention sera décrit pour un signal d'augmentation mais il s'applique bien sûr à tout autre signal de transmission de données qui pourrait être transmis au récepteur du système de navigation par satellites en plus des signaux de navigation émis par les satellites.

Le procédé selon l'invention comprend une étape de transmission 10, pendant des périodes d'amélioration TAAi successives et au moyen d'un signal d'amélioration émis en cohérence avec le signal d'augmentation, de données Ni, qui sont en outre transmises au moyen du signal d'augmentation pendant des périodes de transmission TAi successives débutant respectivement après la fin des périodes d'amélioration TAAi successives respectives (c'est à dire de même indice i).

Avantageusement, par signal d'amélioration émis en cohérence avec le signal d'augmentation, on entend que les signaux sont cohérents au niveau des codes d'étalement, c'est-à-dire que les codes d'étalement sont transmis d'une façon synchrone en utilisant par exemple une modulation QPSK.

Le signal d'augmentation est avantageusement émis par un satellite d'augmentation. Le signal d'amélioration est lui aussi émis par le satellite d'augmentation. Autrement dit, le signal d'amélioration est émis par le même émetteur que le signal d'augmentation. Cette caractéristique permet de transformer la première voie de données en une voie pilote comme nous le verrons par la suite.

Par ailleurs, cette caractéristique permet de transmettre, comme nous le verrons par la suite, les données d'amélioration successives au récepteur pendant des périodes d'amélioration se terminant avant les périodes de transmission de données successives respectives.

En variante, à la place des données Ni il est possible de transmettre vers le récepteur, au moyen du signal d'amélioration, pendant les périodes d'amélioration successives, d'autres données Nai permettant de prédire les données Ni.

Etant donné que l'on se place, dans l'exemple décrit, dans le cas où les données transmises sont des données d'augmentation, les périodes de transmission TAi sont appelées périodes d'augmentation dans la suite du texte.

Le signal d'amélioration étant, dans l'exemple décrit, un signal d'augmentation, les données Ni sont des données d'augmentation.

Le procédé selon l'invention peut aussi comprendre une étape de transmission des données ou des autres données pendant une unique période.

Le signal d'augmentation est envoyé sur une voie, ou canal, de données VD1 et le signal d'amélioration est envoyé sur une deuxième voie, ou canal, de données VD2 (ou voie d'amélioration).

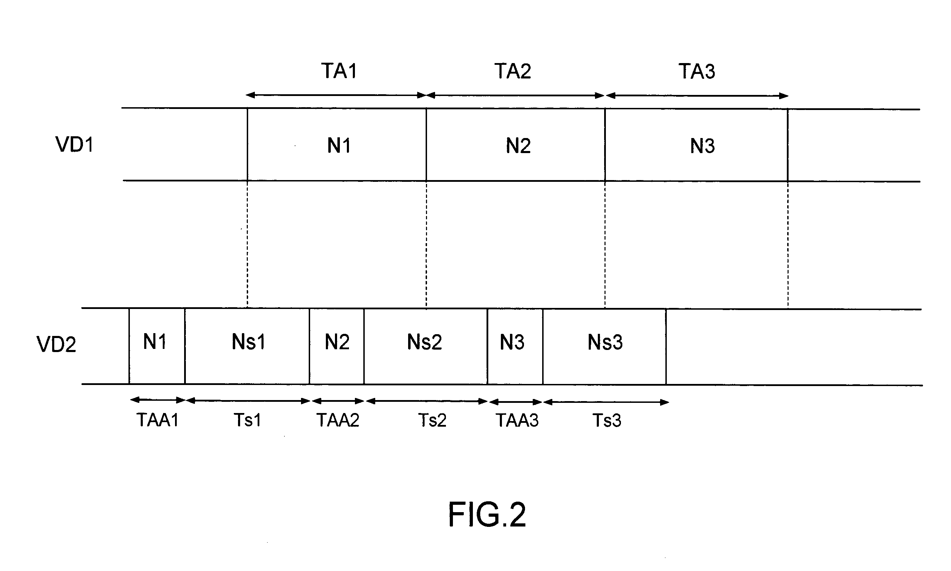

L'étape de transmission est représentée sur la figure 2 représentant, dans le temps, les données qui sont transmises sur la première voie de données VD1 et sur la deuxième voie de données VD2.

Sur la première voie des données VD1 on transmet des premières N1, deuxièmes N2 et troisièmes N3 données d'augmentation pendant une première TA1, une deuxième TA2 et respectivement une troisième TA3 périodes d'augmentation consécutives.

Sur la deuxième voie de données VD2, on transmet les premières N1, deuxièmes N2 et troisièmes N3 données d'amélioration pendant une première TAA1, une deuxième TAA2 et respectivement une troisième TAA3 périodes d'amélioration successives.

La première période d'amélioration TAA1 débute et se termine avant le début de la première période d'augmentation TA1. La deuxième période d'amélioration TA2 débute et se termine avant le début de la deuxième période d'augmentation TA2. Le troisième période d'amélioration TAA3 débute et se termine avant le début de la troisième période d'augmentation TA3.

Classiquement, comme vu précédemment, le signal d'augmentation, ou plus généralement le signal de transmission de données tel qu'on l'entend dans le procédé selon l'invention, est transmis sans codage ou avec un codage de données utilisant les anciennes techniques de transmission de données telles que le codage Viterbi sans entrelacement dans le cas d'un signal d'augmentation. Le signal d'amélioration est envoyé en utilisant les nouvelles techniques de transmission de données telles que l'entrelacement, le turbocode, etc.

Les deux voies de données sont modulées par des symboles.

Le débit en symboles du signal d'amélioration est avantageusement supérieur au débit en symboles du signal de transmission de données, ici le signal d'augmentation.

Cela permet éventuellement d'envoyer, au récepteur, des données supplémentaires Nsi au moyen du signal d'amélioration qui sont différentes des premières données envoyées au moyen du signal d'augmentation. Cette caractéristique permet d'assurer des services supplémentaires au moyen des données supplémentaires. On améliore ainsi la qualité des services existants tout en proposant de nouveaux services qui ne sont pas nécessairement dédiés à la communauté aéronautique.

Sur la représentation de la figure 2, le débit des symboles du signal d'amélioration est tel que les durées des périodes de transmission des données d'amélioration au moyen du signal d'amélioration sont plus courtes que les durées des périodes de transmission des données d'augmentation au moyen du signal d'augmentation.

Cela est représenté sur la figure 2. Des premières Ns1, deuxièmes Ns2 et troisième Ns3 données supplémentaires circulent sur la deuxième voie de données, entre les transmissions consécutives de données d'augmentation, pendant une première Ts1, une deuxième Ts2 et une troisième Ts3 périodes supplémentaires respectives. Autrement dit, le signal d'amélioration transmet les données respectives Ni, ou les autres données respectives Nai permettant de prédire les données respectives, ainsi que des données supplémentaires respectives Nsi pendant les durées d'augmentation respectives TAi.

Sur la représentation de la figure 2, le débit des symboles du signal d'amélioration est tel que la durée de la période de transmission des données d'amélioration Ni au moyen du signal d'amélioration et des données supplémentaire Nsi est égale à la durée de la période de transmission des données d'augmentation Ni au moyen du signal d'augmentation.

Les données d'augmentation Ni ou les autres données Nai permettant au récepteur de prédire les données d'augmentation Ni qui sont transmises au moyen du signal d'amélioration sont ensuite reçues 20 par le récepteur.

Les données d'augmentation Ni d'indice i qui sont envoyées au moyen du signal d'amélioration sont complètement reçues avant l'envoi des données d'augmentation de même indice qui sont transmises vers le récepteur au moyen du signal d'augmentation. Autrement dit, le récepteur reçoit une donnée transmise au moyen du signal d'amélioration avant l'envoi d'une donnée de même indice, transmise au moyen du signal d'augmentation.

On met à profit l'avance avec laquelle le récepteur reçoit les données Ni au moyen du signal d'amélioration pour effacer les modulations sur le canal existant, c'est-à-dire sur la première voie de données.

Plus précisément, le récepteur génère les symboles 30 successifs servant à moduler le signal d'augmentation pendant les périodes d'augmentation TAi successives respectives, au moyen des données Ni ou des autres données Nai respectivement reçues. Il s'agit des données reçues par le récepteur et qui ont été transmises au moyen du signal d'amélioration. Le récepteur effectue des traitements identiques à ceux réalisés par le système pour transformer les données d'augmentation en symboles.

Une fois les symboles obtenus, le récepteur peut poursuivre 40 le signal de transmission de données, qui est ici un signal d'augmentation, avec une bonne précision car en supprimant l'effet de la modulation du signal d'augmentation par les symboles qu'il a générés, on peut gagner environ 6dB pour la poursuite de la phase du signal, par exemple.

Cette étape de poursuite 40 réalisée en démodulant le signal d'augmentation au moyen des symboles générés revient à transformer la première voie de données VD1 en une voie pilote sur laquelle on ne transmet pas de données. La démodulation du signal d'augmentation au moyen des symboles générés est appelée « symbol wipe off » en terminologie anglo-saxonne en référence à la terminologie anglo-saxonne « data wipe off » quand il s'agit de démoduler au moyen de données.

On a vu, que sur la deuxième voie de données VD2, on transmet avec un peu d'avance, soit les données Ni qui sont transmises sur la première voie de données VD1, soit d'autres données Nai qui permettent de prédire ces données Ni. Cette deuxième possibilité apporte un gain en terme de débit du signal d'amélioration car on n'est pas obligé de transmettre les données Ni dans leur totalité. Lorsqu'on utilise cette deuxième solution, une étape supplémentaire de prédiction des données Ni est réalisée au niveau du récepteur, préalablement à l'étape de génération des symboles 30.

Avantageusement, dans le cas où les données transmises par le signal d'amélioration sont codées au moyen d'un deuxième codage de données, le deuxième codage de données est plus performant que le premier codage de façon que le seuil de démodulation du signal d'amélioration, par le récepteur, soit plus bas que le seuil de démodulation du signal d'augmentation.

Le deuxième codage est, par exemple, un codage du type Turbocode ou LDPC, en référence à l'expression anglo-saxonne « Low Parity Density Code ». Avantageusement, le signal d'amélioration est transmis avec entrelacement.

Sur la deuxième voie de données VD2, la modulation par les symboles est, par exemple, une modulation CSK en référence à l'expression anglo-saxonne « Code Shift Keying ».

En utilisant, sur la deuxième voie, un codage LDPC et une modulation CSK utilisant des symboles de 4 ms et, sur la première voie, un codage Viterbi et des symboles de 4ms, on obtient une amélioration des performances en termes de réception des données de l'ordre de 5, 2 dB.

## Revendications

1. Procédé d'amélioration de la poursuite d'un signal de transmission de données émis vers un récepteur d'un système de navigation par satellites en plus de signaux de navigation qui lui sont transmis par les satellites, **caractérisé en ce qu'**il comprend :
- une étape de transmission (10) vers le récepteur, pendant une période appelé période d'amélioration TAAi, et au moyen d'un signal d'amélioration émis en cohérence avec ledit signal de transmission de données, de données Ni ou d'autres données Nai permettant de prédire lesdites données Ni, lesdites données Ni étant en outre transmises vers le récepteur au moyen du signal de transmission de données pendant une période de transmission TAi débutant après la fin de la période d'amélioration TAAi,
- une étape de réception (20), par le récepteur, desdites données Ni, ou desdites autres données Nai, qui sont transmises au moyen du signal d'amélioration,
- une étape de génération de symboles (30) servant à moduler le signal de transmission de données pendant ladite période de transmission TAi, au moyen desdites données Ni reçues ou des autres données Nai reçues par le récepteur et qui ont été transmises au moyen du signal d'amélioration,
- une étape de poursuite (40) du signal de transmission de données en supprimant l'effet de la modulation dudit signal de transmission de données par les symboles générés.

2. Procédé selon la revendication précédente, dans lequel le signal de transmission de données est un signal d'augmentation.

3. Procédé selon l'une quelconque des revendications précédentes, dans lequel le signal de transmission de données est transmis avec un premier codage de données du type Viterbi.

4. Procédé selon l'une quelconque des revendications précédentes, dans lequel le signal d'amélioration est transmis avec un deuxième codage tel que le seuil de démodulation du signal d'amélioration par le récepteur est plus faible que le seuil de démodulation du signal de transmission de données par le récepteur.

5. Procédé selon l'une quelconque des revendications précédentes, dans lequel le signal d'amélioration est transmis avec un deuxième codage du type LDPC ou Turbocode.

6. Procédé selon l'une quelconque des revendications précédentes, dans lequel le signal d'amélioration est transmis avec entrelacement.

7. Procédé selon l'une quelconque des revendications précédentes, dans lequel la durée de la période d'amélioration est plus courte que la durée de la période de transmission de données.

8. Procédé selon la revendication précédente, dans laquelle des données supplémentaires sont en outre transmises au récepteur au moyen du signal d'amélioration.

9. Procédé selon l'une quelconque des revendications précédentes, dans lequel le signal d'amélioration et le signal de transmission de données sont émis en cohérence par le même émetteur.

## Patentansprüche

1. Verfahren zum Verbessern der Verfolgung eines Datenübertragungssignals, das zu einem Empfänger eines Satellitennavigationssystems zusätzlich zu Navigationssignalen gesendet wird, die von den Satelliten dorthin gesendet werden, **dadurch gekennzeichnet, dass** es Folgendes beinhaltet:
- einen Schritt (10) des Übertragens zu dem Empfänger, während einer Verbesserungsperiode TAAi genannten Periode und mittels eines Verbesserungssignals, das kohärent mit dem Datenübertragungssignal gesendet wird, von Daten Ni oder von anderen Daten Nai, mit denen die Daten Ni vorhergesagt werden können, wobei die Daten Ni ferner mittels des Datenübertragungssignals während einer Übertragungsperiode TAi zu dem Empfänger übertragen werden, die am Ende der Verbesserungsperiode TAAi beginnt,
- einen Schritt (20) des Empfangens, durch den Empfänger, der Daten Ni oder der anderen Daten Nai, die mittels des Verbesserungssignals übertragen werden,
- einen Schritt des Erzeugens von Symbolen (30), die zum Modulieren des Datenübertragungssignals während der Übertragungsperiode TAi dienen, mittels der empfangenen Daten Ni oder anderer Daten Nai, die von dem Empfänger empfangen und mittels des Verbesserungssignals übertragen wurden,
- einen Schritt (40) des Verfolgens des Datenübertragungssignals, wobei der Effekt der Modulation des Datenübertragungssignals durch die erzeugten Symbole unterdrückt wird.

2. Verfahren nach dem vorherigen Anspruch, bei dem das Datenübertragungssignal ein Erhöhungssignal ist.

3. Verfahren nach einem der vorherigen Ansprüche, bei dem das Datenübertragungssignal mit einer ersten Datencodierung des Viterbi-Typs übertragen wird.

4. Verfahren nach einem der vorherigen Ansprüche, bei dem das Verbesserungssignal mit einer zweiten Codierung übertragen wird, so dass die Demodulationsschwelle des Verbesserungssignals durch den Empfänger schwächer ist als die Demodulationsschwelle des Datenübertragungssignals durch den Empfänger.

5. Verfahren nach einem der vorherigen Ansprüche, bei dem das Verbesserungssignal mit einer zweiten Codierung des LDPC- oder Turbocode-Typs übertragen wird.

6. Verfahren nach einem der vorherigen Ansprüche, bei dem das Verbesserungssignal verschachtelt übertragen wird.

7. Verfahren nach einem der vorherigen Ansprüche, bei dem die Dauer der Verbesserungsperiode kürzer ist als die Dauer der Datenübertragungsperiode.

8. Verfahren nach dem vorherigen Anspruch, bei dem darüber hinaus zusätzliche Daten zum Empfänger mittels der Verbesserungssignals übertragen werden.

9. Verfahren nach einem der vorherigen Ansprüche, bei dem das Verbesserungssignal und das Datenübertragungssignal kohärent vom selben Sender gesendet werden.

## Claims

1. A method for improving the tracking of a data transmission signal emitted to a receiver of a satellite navigation system in addition to navigation signals which are transmitted to it by the satellites, **characterised in that** it comprises:
- a step of transmission (10) to the receiver during a period called the improvement period TAAi, and by means of an improvement signal emitted in coherence with said data transmission signal, of data Ni or of other data Nai making it possible to predict said data Ni, said data Ni furthermore being transmitted to the receiver by means of the data transmission signal during a transmission period TAi starting after the end of the improvement period TAAi,
- a step of reception (20), by the receiver, of said data Ni, or of said other data Nai, which are transmitted by means of the improvement signal,
- a step of generating symbols (30) serving to modulate the data transmission signal during said transmission period TAi, by means of said data Ni received or of the other data Nai received by the receiver and which have been transmitted by means of the improvement signal,
- a step of tracking (40) the data transmission signal while removing the effect of the modulation of said data transmission signal by the symbols generated.

2. The method according to the preceding claim, wherein the data transmission signal is an augmentation signal.

3. The method according to any of the preceding claims, wherein the data transmission signal is transmitted with a first data coding of the Viterbi type.

4. The method according to any of the preceding claims, wherein the improvement signal is transmitted with a second coding such that the threshold of demodulation of the improvement signal by the receiver is lower than the threshold of demodulation of the data transmission signal by the receiver.

5. The method according to any of the preceding claims, wherein the improvement signal is transmitted with a second coding of the LDPC or Turbocode type.

6. The method according to any of the preceding claims, wherein the improvement signal is transmitted with interleaving.

7. The method according to any of the preceding claims, wherein the duration of the improvement period is shorter than the duration of the data transmission period.

8. The method according to the preceding claim, wherein additional data are furthermore transmitted to the receiver by means of the improvement signal.

9. The method according to any of the preceding claims, wherein the improvement signal and the data transmission signal are emitted in coherence by the same emitter.
